# EUROPÄISCHE PATENTANMELDUNG

(11) **EP 4 549 515 A1**
(43) Veröffentlichungstag der Anmeldung: **07.05.2025**
(21) Anmeldenummer: 23207299.1
(22) Anmeldetag: 01.11.2023
(51) Int. Cl.: C08L 83/04, C09D 183/04, C09J 183/04

(54) **ZINNFREI KATALYSIERTE RTV-1 SILIKONZUSAMMENSETZUNG MIT VERBESSERTER LAGERSTABILITÄT**

(71) Anmelder: Sika Technology AG, 6340 Baar (CH)
(72) Erfinder: SUTER, Riccardo, 5400 Baden (CH); WILLIAMS, Sian, Leeds, LS7 3HD (GB)
(74) Vertreter: Sika Patent Attorneys

(57) **Zusammenfassung**

Beschrieben wird eine feuchtigkeitshärtende Silikonzusammensetzung, umfassend mindestens ein vernetzbares Polydiorganylsiloxan mit Alkoxysilan-Endgruppen, mindestens einen Kondensationskatalysator, mindestens einen Vernetzer mit Alkoxysilangruppen, sowie optional weitere Inhaltsstoffe; dadurch gekennzeichnet, dass der Kondensationskatalysator ein Reaktionsprodukt erhalten aus der Umsetzung eines Äquivalents eines Metallkomplexes mit zwischen 0.1 und 1 Äquivalenten einer, bevorzugt partiell veresterten, Phosphor- oder organischen Phosphonsäure darstellt, wobei der Metallkomplex MC ein Titanium(IV)-, Zirkonium(IV)- oder ein Aluminium(III)-Komplex, bevorzugt ein Titanium(IV)-Komplex, mit mindestens einem Alkoxyliganden sowie mindestens einem organischen Chelatliganden, ist.

Die Zusammensetzung ist besonders als niedermoduliger Kleb- oder Dichtstoff geeignet und weist dabei ausgezeichnete mechanische Eigenschaften wie Zugfestigkeit und Weiterreissfestigkeit und eine ausgezeichnete Lagerstabilität auf, insbesondere auch in Form einer RTV-1 Formulierung.

## Beschreibung

### Technisches Gebiet

Die Erfindung betrifft feuchtigkeitshärtende, kondensationsvernetzende Silikonzusammensetzungen, deren Verwendung als elastische Kleb- und Dichtstoffe, sowie Verfahren zum Verfugen und Verkleben von Substraten.

### Stand der Technik

Silikone sind bekannte Zusammensetzungen, welche schon lange als Kleb- oder Dichtstoffe eingesetzt werden. Solche Silikone können als ein- oder zweikomponentige Silikonzusammensetzungen gestaltet werden und enthalten als Hauptkomponenten üblicherweise ein vernetzbares Polydiorganylsiloxan, einen Vernetzer und einen Katalysator. Es wird zwischen kaltvernetzenden RTV-Silikonen (RTV = raumtemperaturvernetzend bzw. -vulkanisierend) und warmvernetzenden HTV-Silikonen (HTV = hochtemperaturvernetzend bzw. - vulkanisierend) unterschieden. Ein- und zweikomponentige RTV-Silikone werden auch als RTV-1 Silikone bzw. RTV-2 Silikone bezeichnet.

Feuchtigkeitshärtende, kondensationsvernetzende RTV-Silikone sind lange bekannt. Ebenfalls bekannt ist, dass solche Zusammensetzungen auf Basis sogenannter neutraler Vernetzung aushärten können. Klassischerweise setzten neutral vernetzende RTV-1 Silikone Oximverbindungen frei, deren Geruch als sehr unangenehm empfunden wird und die aus Gründen des Gesundheitsschutzes weniger bevorzugt sind und zunehmend gesetzlich eingeschränkt werden. Alternativ zu Oxim-freisetzenden Zusammensetzungen können neutral vernetzende RTV-1 Silikone auch mit Alkoxysilangruppenhaltigen Polydiorganylsiloxanen formuliert werden. Spaltprodukte der Vernetzung sind dann lediglich Alkohole, welche aus den Alkoxysilangruppen abgespalten werden, meist Methanol oder Ethanol, deren Geruch und toxikologisches Profil deutlich weniger problematisch sind als mit Oximen.

Die in feuchtigkeitshärtenden, kondensationsvernetzenden Silikonen eingesetzten Polydiorganylsiloxane können mit Hydroxyl-Gruppen terminiert sein. Allerdings hat sich gezeigt, dass diese Art Endgruppe die erreichbaren Eigenschaften einschränkt und zu grösseren Problemen beim Compoundier-Prozess führt, speziell im Fall von RTV-1 Silikonen. Alternativ können die Polydiorganylsiloxane mit Alkyldialkoxysilyl- oder Trialkoxysilyl-Endgruppen modifiziert sein. Solche modifizierten Polymere sind lange bekannt. Ihre Herstellung mittels Kondensationsreaktion wird beispielsweise beschrieben in EP763557 oder EP0559045, ihre Herstellung mittels Hydrosilylierungsreaktion wird beispielsweise beschrieben in US4898910.

Für die Verwendung als niedermodulige Dichtstoffe, beispielsweise zur Fugenabdichtung im Sanitärbereich, werden gerne einkomponentige Silikone, also RTV-1 Silikone verwendet. Werden diese mit Polydiorganylsiloxanen mit Alkyldialkoxysilyl- oder Trialkoxysilyl-Endgruppen formuliert und mit Aushärtungskatalysatoren auf Zinnbasis ausgerüstet, so werden oft nur vergleichsweise hochmodulig aushärtende Zusammensetzungen erhalten, welche für einen Einsatz als niedermodulige Kleb- und Dichtstoffe nicht gut geeignet sind. Zudem sind Zinnkatalysatoren bezüglich Umwelt- und toxikologischen Eigenschaften nicht unbedenklich.

Diesem Problem kann teilweise begegnet werden, indem Aushärtungskatalysatoren auf Titanat-, Zirkonat- oder Aluminatbasis anstatt Zinnbasis eingesetzt werden. Titanat-, Zirkonat-, beziehungsweise Aluminatkatalysierte RTV-1 Silikone enthaltend Polydiorganylsiloxanen mit Alkyldialkoxysilyl- oder Trialkoxysilyl-Endgruppen sind jedoch meist nicht genügend lagerstabil, insbesondere unter erhöhten Temperaturen und sie verändern sich im geschlossenen Gebinde nach kurzer Zeit irreversibel aufgrund unerwünschter Reaktionen, so dass sie im Extremfall nach kurzer Zeit nicht mehr zufriedenstellend eingesetzt werden können und entsorgt werden müssen. Dabei verlieren die nicht lagerstabilen Zusammensetzungen beispielsweise ihre mechanischen Eigenschaften nach Aushärtung, wie insbesondere die Zugfestigkeit oder die Elastizität oder Härten im ungünstigsten Fall nicht mehr aus.

Es besteht daher ein Bedarf an einfach herzustellenden feuchtigkeitshärtenden, kondensationsvernetzenden Silikonzusammensetzungen auf Basis von Polydiorganylsiloxanen mit Alkoxysilyl-Endgruppen und Kondensationskatalysatoren auf Titanat-, Zirkonat- oder Aluminat-basis, die als niedermodulige Kleb- und Dichtstoffe geeignet sind und dabei eine ausreichend lange Offenzeit und vor allem eine ausgezeichnete Lagerstabilität auch bei erhöhten Temperaturen aufweisen und somit die Nachteile des Standes der Technik überwinden.

### Darstellung der Erfindung

Aufgabe der vorliegenden Erfindung ist daher die Bereitstellung einer feuchtigkeitshärtenden, kondensationsvernetzenden RTV-1 Silikonzusammensetzung basierend auf Polydiorganylsiloxanen mit Alkoxysilyl-Endgruppen und Kondensationskatalysatoren auf Titanat-, Zirkonat- oder Aluminatbasis, die sowohl eine gute Offenzeit als auch eine aussergewöhnlich gute Lagerstabilität, ohne signifikanten Verlust ihrer mechanischen Eigenschaften nach langer Lagerung selbst unter erhöhten Temperaturen, aufweist und die als niedermoduliger Kleb- und Dichtstoff verwendet werden kann.

Es wurde überraschenderweise festgestellt, dass bei Verwendung eines Kondensationskatalysator in Form eines Reaktionsprodukts, erhalten aus der Umsetzung eines Äquivalents eines Metallkomplexes mit zwischen 0.1 und 1 Äquivalenten einer, bevorzugt partiell veresterten, Phosphor- oder organischen Phosphonsäure, wobei der Metallkomplex ein Titanium(IV)-, Zirkonium(IV)- oder ein Aluminium(III)-Komplex, bevorzugt ein Titanium(IV)-Komplex, mit mindestens einem Alkoxyliganden sowie mindestens einem organischen Chelatliganden, ist, mit zwischen 0.1 und 1 Äquivalenten einer, bevorzugt partiell veresterten, Phosphor- oder organischen Phosphonsäure, in einer RTV Silikonzusammensetzung basierend auf Alkoxysilan-terminierten Polydiorganosiloxanpolymeren eine unerwartet hohe Verbesserung der Lagerstabilität erreicht werden kann, was in Titanat-, Zirkonat-, beziehungsweise Aluminat-katalysierten Zusammensetzungen äusserst überraschend ist. Weiterhin kann eine sehr gute Offenzeit erreicht werden, und die resultierenden Zusammensetzungen sind besonders niedermodulig, mechanisch stark und weisen eine generell gute Haftung auf typischen Substraten aus, was sie als Kleb- und Dichtstoffe besonders geeignet macht.

Demgemäss betrifft die Erfindung eine feuchtigkeitshärtende, kondensationsvernetzende Silikonzusammensetzung umfassend
a) mindestens ein vernetzbares Polydiorganylsiloxan **P** mit Alkoxysilan-Endgruppen;
b) mindestens einen Kondensationskatalysator **K;**
c) mindestens einen Vernetzer **V** mit Alkoxysilangruppen;
d) optional weitere Inhaltsstoffe;
dadurch gekennzeichnet, dass der Kondensationskatalysator **K ein** Reaktionsprodukt erhalten aus der Umsetzung eines Äquivalents eines Metallkomplexes **MC** mit zwischen 0.1 und 1 Äquivalenten einer, bevorzugt partiell veresterten, Phosphor- oder organischen Phosphonsäure **PO** darstellt, wobei der Metallkomplex **MC** ein Titanium(IV)-, Zirkonium(IV)- oder ein Aluminium(III)-Komplex, bevorzugt ein Titanium(IV)-Komplex, mit mindestens einem Alkoxyliganden sowie mindestens einem organischen Chelatliganden, ist.

Im Folgenden wird die Erfindung ausführlich erläutert.

### Wege zur Ausführung der Erfindung

Die hier angegebenen Viskositäten können gemäss DIN 53018 bestimmt werden. Die Messung kann mittels Kegel-Platte-Viskosimeter MCR101 der Firma Anton-Paar, Österreich, mit Kegel-Typ CP 25-1 bei 23°C erfolgen. Die angegebenen Viskositätswerte beziehen sich auf eine Scherrate von 0,5 s⁻¹.

Die Vernetzungsreaktion umfasst Hydrolyse- und Kondensationsreaktionen von Alkoxysilyl-Gruppen. Diese sind dem Fachmann bekannt und können schematisch wie folgt dargestellt werden.

≡ Si-OR + H₂O → ≡Si-OH + ROH (1)

≡ Si-OH + HO-Si≡ → ≡Si-O-Si≡ + H₂O (2)

Bei Zutritt von Wasser und gegebenenfalls mithilfe eines Katalysators hydrolysieren Alkoxysilyl-Gruppen unter Bildung von Silanolen (Si-OH) und einem Alkohol (Schritt 1). Die Silanole sind in der Regel nicht stabil und kondensieren spontan unter Bildung von Siloxanbindungen (-Si-O-Si-), so dass Siloxane gebildet werden (Schritt 2). Sofern mehr als eine Alkoxygruppe pro Si-Atom vorliegt, können höher kondensierte Systeme gebildet werden. Bei teilweiser Hydrolyse wird nur ein Teil der Alkoxygruppen hydrolysiert und kondensiert. Die Reaktionsgeschwindigkeit der Vernetzungsreaktion hängt von der Kinetik der Teilschritte ab. Diese Kinetik kann z.B. in ¹H-NMR und ²⁹Si-NMR Experimenten für Einzelkomponenten ermittelt werden, wie z.B. beschrieben in "Zeitschrift für Naturforschung (1999), 54b, 155-164" und "Phosphorus, Sulfur, and Silicone and the Related Elements (2011), 186(2), 240-254".

Der hier verwendete Begriff der homogenen Tiefenhärtung meint eine homogene Härtung einer Silikonzusammensetzung in einer Fuge über deren gesamten Querschnitt. Dies bedeutet, dass die Eigenschaften, insbesondere die mechanischen Eigenschaften wie Härte und Elastizität, der Silikonzusammensetzung nach Aushärtung auf der Vorderseite und der Rückseite der Fuge im Rahmen der jeweiligen Messgenauigkeiten gleich sind.

Die erfindungsgemässe Zusammensetzung enthält
a) mindestens ein vernetzbares Polydiorganylsiloxan **P** mit Alkoxysilan-Endgruppen;
b) mindestens einen Kondensationskatalysator **K;**
c) mindestens einen Vernetzer **V** mit Alkoxysilangruppen;
d) optional weitere Inhaltsstoffe;
dadurch gekennzeichnet, dass der Kondensationskatalysator **K** ein Reaktionsprodukt erhalten aus der Umsetzung eines Äquivalents eines Metallkomplexes **MC** mit zwischen 0.1 und 1 Äquivalenten einer, bevorzugt partiell veresterten, Phosphor- oder organischen Phosphonsäure **PO** darstellt, wobei der Metallkomplex **MC** ein Titanium(IV)-, Zirkonium(IV)- oder ein Aluminium(III)-Komplex, bevorzugt ein Titanium(IV)-Komplex, mit mindestens einem Alkoxyliganden sowie mindestens einem organischen Chelatliganden, ist.

Die erfindungsgemässe Zusammensetzung ist ein feuchtigkeitshärtendes, kondensationsvernetzendes RTV-Silikon. Dieses liegt bevorzugt als eine einkomponentige Zusammensetzung (RTV-1 Silikon) vor, bei der alle Inhaltsstoffe bei der Formulierung vermischt werden und die gesamte Mischung unter Ausschluss von Feuchtigkeit gelagert wird. Bei solchen RTV-1 Silikonen erfolgt die Aushärtung durch Kontakt mit Wasser, im Allgemeinen durch Kontakt mit Luftfeuchtigkeit. Alternativ kann als zweikomponentige Zusammensetzung (RTV-2) vorliegen. Dabei enthält die zweite Komponente insbesondere Wasser, üblicherweise dispergiert in Weichmacher und allenfalls weiteren Additiven wie Füllstoffen. Bevorzugt liegt die erfindungsgemässe Zusammensetzung als eine einkomponentige RTV-1 Silikonzusammensetzung vor.

### Polvdioraanvlsiloxan P mit Alkoxvsilan-Endaruppen

Die erfindungsgemässe Zusammensetzung enthält mindestens ein vernetzbares Polydiorganylsiloxan **P** mit Alkoxysilan-Endgruppen. Solche vernetzbaren Polydiorganylsiloxane sind dem Fachmann gut bekannt. Die vernetzbaren Polydiorganylsiloxane weisen funktionelle Gruppen, insbesondere zwei oder mehr funktionelle Gruppen auf, über die eine Vernetzung möglich ist. Diese funktionellen Gruppen können in einer Seitengruppe oder einer Endgruppe des Polydiorganylsiloxans vorliegen, wobei endständige funktionelle Gruppen bevorzugt sind. Solche Polydiorganylsiloxane mit endständigen funktionellen Gruppen werden auch als α,ω-funktioneiie Polydiorganylsiloxane bezeichnet. Die funktionellen Gruppen des mindestens einen vernetzbaren Polydiorganylsiloxans **P** sind Alkoxy-Gruppen.

Die Viskosität der verwendeten Polydiorganylsiloxane **P** kann in Abhängigkeit vom Einsatzzweck in breiten Bereichen variieren. Das erfindungsgemäß eingesetzte Polydiorganylsiloxan kann bei einer Temperatur von 23 °C z.B. eine Viskosität von 10 bis 500'000 mPa s, bevorzugt von 5'000 bis 400'000 mPa s, besonders bevorzugt von 6'000 bis 350'000 mPa s aufweisen.

Das mindestens eine vernetzbare Polydiorganylsiloxan **P** ist bevorzugt ein lineares Polydiorganylsiloxan, insbesondere ein Polydiorganylsiloxan der Formel (I)

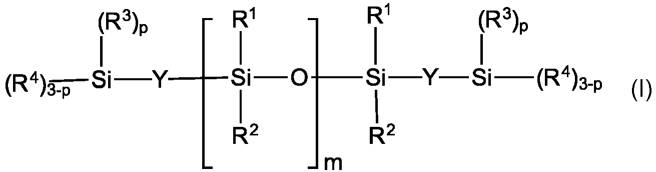

Dabei stehen die Reste R¹, R² und R³ unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.

Insbesondere stehen die Reste R¹ und R² für Alkylreste mit 1 bis 5, insbesondere mit 1 bis 3, C-Atomen, bevorzugt für Methylgruppen. Die Reste R³ stehen unabhängig voneinander insbesondere für Phenyl-, Vinyl oder für Methylgruppen.

Die Reste R⁴ stehen unabhängig voneinander für Alkoxygruppen mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen. Y in Formel (I) ist eine divalente Kohlenwasserstoffgruppe mit 1 bis 8 C-Atomen, bevorzugt mit 2 bis 6 C-Atomen, besonders bevorzugt eine Ethylen- oder Hexylen-Brücke, oder ein Sauerstoffatom, oder eine Gruppe der allgemeinen Formel (II) 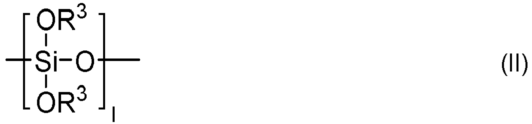 wobei R³ die oben angegebene Bedeutung besitzt und I = 1-5 ist.

Der Index m der allgemeinen Formel (I) ist so gewählt, dass das Polydiorganylsiloxan **P** bei einer Temperatur von 23 °C z.B. die obenstehende Viskosität aufweist. Der Index m der allgemeinen Formel (I) kann z.B. im Bereich von 10 bis 10'000 und bevorzugt von 100 bis 1'500 liegen.

Das Polydiorganylsiloxan **P** der Formel (I) ist insbesondere ein Polydiorganylsiloxan der Formel (Ia). 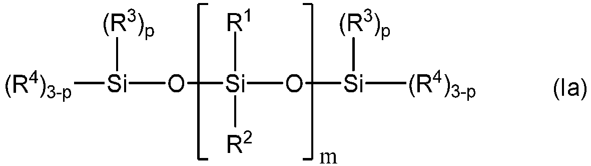 wobei R¹, R², R³, R⁴ und m dieselben Bedeutungen und dieselben bevorzugten Ausführungsformen wie beim Polydiorganylsiloxan **P** der Formel (I) angegeben aufweisen.

Das mindestens eine vernetzbare Polydiorganylsiloxan **P** ist ein Alkoxyterminiertes Polydiorganylsiloxan, bevorzugt ein vernetzbares Alkoxyterminiertes Polydimethylsiloxan. Bevorzugt eingesetzte vernetzbare Polydiorganylsiloxane sind lineare Polydiorganylsiloxane. Somit sind Reste R⁴ in Formel (I) bzw. Formel (la) unabhängig voneinander bevorzugt Alkoxy-Gruppen mit 1 bis 8 C-Atomen, welche gegebenfalls durch F, N, P, O und/oder S substituiert sein können.

Die Reste R³ in Formel (I) bzw. Formel (la) können beispielsweise unabhängig voneinander ausgewählt sein aus einer oder mehrerer der Gruppen Methyl, Ethyl, n-Propyl, i-Popyl, n-Butyl, i-Butyl, n-Pentyl, i-Pentyl, n-Hexyl, i-Hexyl, n-Heptyl, i-Heptyl, n-Octyl, i-Octyl, Cyclopentyl, Cylcohexyl, Phenyl, Vinyl, Allyl, Methoxymethyl, 2-Methoxyethyl Ethoxymethyl, 2-(2-Methoxyethoxy)ethyl, Trifluorpropyl, 2-Aminoethyl, 6-Aminohexyl.

Bevorzugt sind die Reste R³ in Formeln (I) und (la) unabhängig voneinander ausgewählt aus Alkylgruppen mit 1 bis 6, insbesondere mit 1 bis 3, C-Atomen, wie Propyl, Ethyl und Methyl, wobei Ethyl und Methyl bevorzugt sind und Methyl besonders bevorzugt ist.

In einer besonderen Ausführungsform sind alle Reste R³ in Formeln (I) und (la) gleich und ausgewählt aus Alkylgruppen mit 1 bis 6, insbesondere mit 1 bis 3, C-Atomen, wie Propyl, Ethyl und Methyl, wobei Methyl und Ethyl bevorzugt sind und Methyl besonders bevorzugt ist.

Die Polydiorganylsiloxane der allgemeinen Formel (I) und/oder der Formel (la) machen bevorzugt mindestens 90%, bevorzugt mindestens 95%, besonders bevorzugt mindestens 99% der Gesamtmasse an vorhandenem Polydiorganylsiloxan **P** einer erfindungsgemässen Zusammensetzung aus.

Geeignete Polydiorganosiloxane, wie sie in Formel (I) und/oder Formel (la) dargestellt sind, sind bekannt und kommerziell erhältlich. Auch die Herstellung derartiger Polydiorganosiloxane erfolgt in bekannter Art und Weise, wie beispielsweise beschrieben in EP0658588.

Polydiorganylsiloxane der allgemeinen Formel (la) können durch Kondensationsreaktion von OH-terminierten Polydiorganylsiloxanen mit Alkoxy-funktionellen Silanen oder Siloxanen hergestellt werden. Die Herstellung durch Kondensationsreaktion kann nach Verfahren erfolgen wie beispielsweise in EP763557 oder EP0559045 beschrieben. Alternativ können Polydiorganylsiloxane der allgemeinen Formel (I) durch Hydrosilylierungsreaktion von Vinyl-terminierten Polydiorganylsiloxanen mit Si-H funktionellen Alkoxy-Silanen oder-Siloxanen bzw. von Si-H terminierten Polydiorganylsiloxanen mit Vinyl-funktionellen Alkoxy-Silanen oder-Siloxanen hergestellt werden. Die Herstellung durch Hydrosilylierungsreaktion kann nach Verfahren erfolgen wie beispielsweise in US4898910 beschrieben.

In einer bevorzugten Ausführungsform werden Polydiorganylsiloxane der allgemeinen Formel (I) und Formel (la) durch Kondensationsreaktion von OH-terminierten Polydiorganylsiloxanen mit Alkoxy-funktionellen Silanen oder Siloxanen hergestellt. In einer besonders bevorzugten Ausführungsform werden Polydiorganylsiloxane der allgemeinen Formel (I) und Formel (la) durch Kondensationsreaktion von OH-terminierten Polydiorganylsiloxanen mit Alkoxy-funktionellen Silanen oder Siloxanen unter Katalyse durch Amidine oder Guanidine, ggf. unter Co-Katalyse eines Metallkatalysators, hergestellt. Geeignete Amidin- und Guanidin-Katalysatoren werden beispielsweise in WO 2016/207156 sowie in WO 2015/193208 beschrieben.

In bevorzugten Ausführungsformen der feuchtigkeitshärtenden Silikonzusammensetzung wird das vernetzbare Polydiorganylsiloxan **P** in einer Kondensationsreaktion aus OH-terminiertem Polydiorganylsiloxan und einem Tri- oder Tetraalkoxysilan hergestellt, bevorzugt einem Methyltrialkoxysilan, Phenyltrialkoxysilan oder einem Vinyltrialkoxysilan.

In besonders bevorzugten Ausführungsformen der feuchtigkeitshärtenden Silikonzusammensetzung wird die Umsetzung des OH-terminierten Polydiorganylsiloxans mit dem Tri- oder Tetraalkoxysilan in Gegenwart eines Amidin- oder Guanidinkatalysators durchgeführt.

Die feuchtigkeitshärtende Silikonzusammensetzung enthält bevorzugt zwischen 10 Gew.-% und 60 Gew.-%, insbesondere zwischen 15 Gew.-% und 50 Gew.-%, bevorzugt zwischen 20 Gew.-% und 40 Gew.-% Polydiorganylsiloxan **P,** bezogen auf die gesamte Zusammensetzung.

### Vernetzer V mit Alkoxysilangruppen

Die erfindungsgemässe Zusammensetzung umfasst ferner mindestens einen Vernetzer **V** mit Alkoxysilangruppen. Alkoxysilangruppen sind hydrolysierbare Gruppen, die, gegebenenfalls unter vorgängiger Hydrolyse und Bildung einer Silanolgruppe, mit den funktionellen Gruppen des Polydiorganylsiloxans unter Bildung einer Siloxan-Bindung reagieren können. Bevorzugt erfolgt die Reaktion zwischen der funktionellen Gruppe des Polydiorganylsiloxans und der hydrolysierbaren Gruppe des Vernetzers durch eine Kondensationsreaktion, gegebenenfalls folgend auf eine Hydrolysereaktion mindestens einer der involvierten Alkoxysilangruppen. Dabei werden in der Regel Nebenprodukte wie Wasser oder Alkohole freigesetzt.

Erfindungsgemässe Vernetzer **V** mit hydrolysierbaren Resten entsprechen insbesondere der allgemeinen Formel (III)

R⁵ₙSiX₄₋ₙ (III)

wobei R⁵ unabhängig voneinander ein nicht hydrolysierbarer einwertiger Kohlenwasserstoffrest mit 1 bis 18 C-Atomen, welcher gesättigt oder ungesättigt ist und gegebenenfalls eine oder mehrere funktionelle Gruppen enthaltend die Elemente F, N, P, O und/oder S aufweist, ist, n gleich 0, 1, 2 oder 3 ist, bevorzugt 0 oder 1, X unabhängig voneinander eine OH-Gruppe oder eine lineare oder verzweigte Alkoxy-Gruppen mit 1 bis 8 C-Atomen, welche gegebenfalls durch F, N, P, O und/oder S substituiert sein kann und gegebenenfalls ungesättigte und/oder cycloaliphatische und/oder aromatische Anteile aufweist.

Sofern X für eine Alkoxy-Gruppe steht, sind Alkoxy-Gruppen X unabhängig voneinander Alkoxy-Gruppen mit 1 bis 8 C-Atomen, welche gegebenenfalls durch F, N, P, O und/oder S substituiert sein können und gegebenenfalls ungesättigte und/oder cycloaliphatische und/oder aromatische Anteile aufweisen. Die Alkoxy-Gruppen X können beispielsweise unabhängig voneinander ausgewählt sein aus einer oder mehrerer der Gruppen Methoxy, Ethoxy, n-Propoxy, i-Propoxy, n-Butoxy, i-Butoxy, n-Pentoxy, i-Pentoxy, n-Hexoxy, i-Hexoxy, n-Heptoxy, i-Heptoxy, n-Octoxy, i-Octoxy, Cyclopentoxy, Cylcohexoxy, Phenoxy, Vinyloxy, Allyloxy, Methoxymethoxy, 2-Methoxyethoxy, Ethoxymethoxy, 2-(2-Methoxyethoxy)ethoxy, Trifluorpropoxy, 2-Aminoethoxy, 6-Aminohexoxy.

Bevorzugt sind die Alkoxy-Gruppen X unabhängig voneinander ausgewählt aus Alkoxy-Gruppen mit 1 bis 6, insbesondere mit 1 bis 3, C-Atomen, wie Propoxy, Ethoxy und Methoxy, wobei Methoxy und Ethoxy bevorzugt sind und Methoxy besonders bevorzugt ist.

In einer besonderen Ausführungsform sind alle Gruppen X gleich und ausgewählt aus Alkoxy-Gruppen mit 1 bis 6, insbesondere mit 1 bis 3, C-Atomen, wie Propoxy, Ethoxy und Methoxy, wobei Methoxy und Ethoxy bevorzugt sind und Methoxy besonders bevorzugt ist.

Beispiele für Vernetzer der allgemeinen Formel (III) sind Methyltrimethoxysilan, Dimethyldimethoxysilan, Ethyltrimethoxysilan, Propyltrimethoxysilan, i-Butyltrimethoxysilan, Octyltrimethoxysilan, Hexadecyltrimethoxysilan, Vinyltrimethoxysilan, Vinyltris(2-methoxyethoxy)silan, Vinyldimethoxymethylsilan, Phenyltrimethoxysilan, Tetramethylorthosilikat, 3-Methacryloxypropyltrimethoxysilan, 3-Mercaptopropyltrimethoxysilan, 3-Aminopropyltrimethoxysilan, 3-Glycidoxypropyltrimethoxysilan, 3-Aminopropyltrimethoxysilan, 2-Aminoethyl-3-aminopropyltrimethoxysilan, (Trimethoxysilyl)methyl-O-methylcarbamat, N-(Trimethoxysilyl)methyl)methacrylamid, N-(Trimethoxysilyl)methyl)cyclohexanamin, N,N'-(Methoxy(methyl)silandiyl)dibenzamid und die entsprechenden Verbindungen, bei denen alle Methoxygruppen entweder durch Ethoxygruppen oder durch Propoxygruppen ersetzt sind, also z.B. Methyltriethoxysilan usw.

In einer bevorzugten Ausführungsform der Erfindung sind alle Gruppen X Alkoxy-Gruppen, besonders bevorzugt Methoxy- und/oder Ethoxy-Gruppen.

Gemäss der vorhergehenden Beschreibung, können Vernetzer **V,** insbesondere Vernetzer **V** der allgemeinen Formel (III), ganz oder teilweise hydrolysiert und zu Siloxanen kondensiert vorliegen. Solche kondensierten Siloxane können aus einem oder mehreren verschiedenen Vernetzern der allgemeinen Formel (III) hergestellt werden, wobei mindestens einer der zugrundeliegenden Vernetzer ein Trialkoxysilan oder ein Tetraalkoxysilan ist, und wobei der mittlere Kondensationsgrad des Siloxans bevorzugt mindestens 4 ist. Bei dem Siloxan handelt es sich somit bevorzugt um ein Alkoxygruppen enthaltendes Kondensationsprodukt der monomeren Alkoxysilane der allgemeinen Formel (III).

Es können Mono-, Di-, Tri- oder Tetraalkoxysilane oder Mischungen davon für die teilweise Hydrolyse und Kondensation eingesetzt werden, wobei mindestens ein Alkoxysilan ein Tri- oder Tetraalkoxysilan ist. In Abhängigkeit von den eingesetzten Alkoxysilanen und der Reaktionsführung, insbesondere der zugegebenen Menge an Wasser, kann der Kondensationsgrad und der Anteil der im gebildeten Siloxan verbleibenden Alkoxygruppen eingestellt werden, wobei der mittlere Kondensationsgrad des Siloxans bevorzugt mindestens 4 ist. Das Siloxan kann aus linearen und/oder verzweigten Ketten, Ringen oder Käfigen bestehen. Dem Fachmann ist klar, dass meist Mischungen solcher Strukturelemente vorliegen. Die Alkoxysilane können am Si-Atom gebundene nicht hydrolysierbare Gruppen, insbesondere einwertige Kohlenwasserstoffreste, die gegebenenfalls eine oder mehrere funktionelle Gruppen aufweisen, aufweisen, die im gebildeten Siloxan verbleiben. Der als Nebenprodukt gebildete Alkohol kann entfernt werden, z.B. durch Abdampfen im Vakuum. Daraus gebildete Alkoxygruppen enthaltende Siloxane sind bekannt und im Handel erhältlich.

Daneben können auch zusätzlich Monoalkoxysilane und/oder Dialkoxysilane zur Herstellung des Alkoxygruppen enthaltenden Siloxans mit verwendet werden. Beispiele sind Trimethylmethoxysilan, Triethylmethoxysilan, Triphenylmethoxysilan, Dimethyldimethoxysilan, Diethyldimethoxysilan und Diphenyldimethoxysilan und die entsprechenden Silane, in denen alle Methoxygruppen entweder durch Ethoxygruppen oder Propoxygruppen ersetzt sind. Die Monoalkoxysilane und/oder Dialkoxysilane können z.B. eingesetzt werden, um den Kondensationsgrad oder die Verzweigung des gebildeten Siloxans einzustellen.

Bevorzugte Tri- oder Tetraalkoxysilane, die zur Herstellung des Alkoxygruppen enthaltenden Siloxans eingesetzt werden, sind Methyltrimethoxysilan, Methyltriethoxysilan, Vinyltrimethoxysilan, Vinyltriethoxysilan, n-Propyltrimethoxysilan, n-Propyltriethoxysilan, Phenyltrimethoxysilan, Phenyltriethoxysilan, 3-Glycidoxypropyltrimethoxysilan, 3-Glycidoxypropyltriethoxysilan, 3-Mercaptopropyltrimethoxysilan, 3-Mercaptopropyltriethoxysilan, Tetraethoxysilan, Tetramethoxysilan, und Mischungen davon.

In bevorzugten Ausführungsformen der feuchtigkeitshärtenden Silikonzusammensetzung ist Vernetzer **V** ausgewählt aus Alkyl-, Alkenyl- und Aryltrimethoxysilanen, gegebenenfalls weiteren Silanen und/oder Mischungen dieser Silane. Vernetzer **V** ausgewählt aus Alkyl-, Alkenyl- und Aryltrimethoxysilanen sind bevorzugt in einer Menge von jeweils zwischen 0.1 Gew.-% und 2.5 Gew.-%, bevorzugt zwischen 0.5 Gew.-% und 2 Gew.-%, bezogen auf die gesamte Zusammensetzung, enthalten.

In denselben oder anderen bevorzugten Ausführungsformen der feuchtigkeitshärtenden Silikonzusammensetzung enthält die Zusammensetzung zusätzlich einen Vernetzer **V** mit Haftvermittlerwirkung, bevorzugt ausgewählt aus Tris[3-(trimethoxysilyl)propyl] isocyanurat, 3-Glycidoxypropyltrimethoxysilan, 3-Glycidoxypropyltriethoxysilan, 3-Mercaptopropyltrimethoxysilan und beliebigen Mischungen davon, insbesondere in einer Menge von zwischen 0.1 Gew.-% und 5 Gew.-%, bevorzugt zwischen 0.5 Gew.-% und 4 Gew.-%, bezogen auf die gesamte Zusammensetzung.

### Kondensationskatalvsator K

In der erfindungsgemässen Zusammensetzung ist ferner mindestens ein Kondensationskatalysator **K** enthalten. Dieser dient zur Katalyse der zwischen dem vernetzbaren Polydiorganylsiloxan **P** und dem Vernetzer **V** bei Anwesenheit von Feuchtigkeit bzw. Wasser stattfindenden Hydrolyse und Kondensation.

Kondensationskatalysator **K** ist ein Reaktionsprodukt erhalten aus der Umsetzung eines Äquivalents eines Metallkomplexes **MC,** wobei der Metallkomplex **MC** ein Titanium(IV)-, Zirkonium(IV)- oder ein Aluminium(III)-Komplex, bevorzugt ein Titanium(IV)-Komplex, mit mindestens einem Alkoxyliganden sowie mindestens einem organischen Chelatliganden, ist, mit zwischen 0.1 und 1 Äquivalenten einer, bevorzugt partiell veresterten, Phosphor- oder organischen Phosphonsäure **PO.**

Somit handelt es sich beim Metallkomplex **MC** um ein Titanat, ein Zirkonat oder ein Aluminat.

Als Titanate bzw. Organotitanate werden Verbindungen bezeichnet, welche mindestens einen über ein Sauerstoffatom an das Titanatom gebundenen Liganden aufweisen. Dieselbe Definition gilt für Zirkonate und Aluminate, wobei nur das Metallatom unterschiedlich ist.

Metallkomplex **MC** weist mindestens einen organischen Chelatliganden auf. Organische Chelatliganden sind mehrzähnige Liganden, die Kohlenstoff- sowie Heteroatome umfassen. Solche sind dem Fachmann bestens bekannt. Die Art der organischen Chelatligenden an Metallkomplex **MC** ist nicht besonders eingeschränkt. Ihre Koordinationszahl muss einfach niedrig genug sein, dass gleichzeitig mindestens ein Alkoxyligand am Metallatom komplexiert ist. Bevorzugt sind zweizähnige organische Chelatliganden.

Geeignete organische Chelatliganden am Metallkomplex **MC** sind beispielsweise Acetylaceton (acac), Ethylendiamin (en), Diethylentriamin (dien), Iminodiacetat (ida), Triethylentetramin (trien), Bis(salicyliden)ethylendiamin (salen), Ethylacetoacetat (etac), Oxalat (ox), Tartrat (tart), Citrat (cit), Dimethylglyoxim (dmg), 8-Hydroxychinolin (oxin), 2,2'-Bipyridin (bpy), 1,10-Phenanthrolin (phen), 1,2-Bis(diphenylphosphino)ethan (dppe).

Bevorzugt sind Chelatliganden, die über Carbonylsauerstoffatome am Metall komplexieren. Davon besonders bevorzugt sind Acetylaceton (acac) sowie Ethylacetoacetat (etac).

In bevorzugten Ausführungsformen umfasst der Metallkomplex **MC** einen oder zwei Chelatliganden, bevorzugt Acetylacetonatoliganden und/oder Ethylacetoacetatoliganden.

Die Alkoxyliganden am Metallkomplex **MC** sind nicht besonders limitiert. Dabei handelt es sich bevorzugt um C3 bis C8-Alkoxyliganden, insbesondere verzweigte solche Liganden. Besonders bevorzugt sind als Alkoxyliganden Propoxy-, Isopropoxy- und Isobutoxyliganden.

In bevorzugten Ausführungsformen umfasst der Metallkomplex **MC** einen oder zwei Alkoxyliganden, bevorzugt Alkoxyliganden mit 3 bis 8 Kohlenstoffatomen.

Metallkomplex **MC** kann ein Titanium(IV)-, Zirkonium(IV)- oder ein Aluminium(III)-Komplex sein, wobei Titanium(IV)-Komplexe bevorzugt sind.

Am meisten bevorzugt als Metallkomplex **MC** sind Dialkoxy-bis(ethylacetoacetato)titanate. Diese sind besonders gut zur Herstellung von Kondensationskatalysator K geeignet und führen zu besonders guten katalytischen Eigenschaften. Ausserdem sind sie kommerziell breit erhältlich. Geeignete Dialkoxy-bis(ethylacetoacetato)titanate sind beispielsweise unter dem Handelsnamen Tyzor^{®} IBAY (Dorf Ketal), Tytan^{®} S3 (Borica) oder Tytan^{®} S6 (Borica) erhältlich.

Metallkomplex **MC** wird für die Herstellung von Kondensationskatalysator **K** mit einer, bevorzugt partiell veresterten, Phosphor- oder organischen Phosphonsäure **PO** umgesetzt. Dabei wird ein Äquivalent (Moläquivalent) des Metallkomplexes **MC** mit zwischen 0.1 und 1 Äquivalenten (Moläquivalenten) der Phosphor- oder organischen Phosphonsäure **PO** reagiert, so dass sich Komplexe der Phosphor- oder organischen Phosphonsäure **PO** mit dem Metallkomplex **MC** bilden.

Wenn 2 oder mehr Äquivalente der Phosphor- oder organischen Phosphonsäure **PO** eingesetzt werden, so inaktiviert das den erhaltenen Katalysator komplett und die Zusammensetzung härtet nicht mehr aus. Bevorzugt werden bei der Umsetzung eines Äquivalents des Metallkomplexes **MC** zwischen 0.25 und 0.75 Äquivalente, bevorzugt zwischen 0.4 und 0.6 Äquivalente, der, bevorzugt partiell veresterten, Phosphor- oder organischen Phosphonsäure **PO** eingesetzt. Diese bevorzugten Verhältnisse führen zu besonders vorteilhaften Eigenschaften hinsichtlich der erhaltenen Mechanik und Lagerstabilität.

Die Komplexierungsreaktion der Phosphor- oder organischen Phosphonsäure **PO** mit dem Metallkomplex **MC** lässt sich über ³¹P- und ¹H-NMR Spektroskopie verfolgen. Die NMR-Messungen selbst sind dem Fachmann bekannt und können routinemässig durchgeführt werden. Das folgende Beispiel bezieht sich auf eine Komplexierungsreaktion an einem Titanat. Während der Reaktion verschwinden dabei nach und nach die ³¹P-NMR Signale der freien (nicht komplexierten) Phosphate (0.25 ppm für einen Monoester und 1.45 ppm für einen Diester). Wenn diese Phosphate am Titanatom komplexiert sind, werden neue ³¹P-NMR Signale bei -10 ppm, bzw. -20 ppm in NMR-Spektrum der Reaktionsmischung sichtbar. Gleichzeitig lässt sich der Ligandenaustausch im ¹H-NMR Spektrum der Reaktionsmischung verfolgen. Das Signal der freien P(=O)-OH Gruppe des unkomplexierten, teilweise veresterten Phosphats bei 10.9 ppm verschwindet.

Bei der partiell veresterten, Phosphor- oder organischen Phosphonsäure **PO** handelt es sich bevorzugt entweder um einen Phosphorsäurediester oder um einen Monoester einer organischen Phosphonsäure. Es ist jedoch wichtig, dass mindestens eine P-OH Gruppe in der Phosphor- oder organischen Phosphonsäure **PO** vorhanden ist. Bei letzterer ist der organische Rest nicht speziell limitiert. Es handelt sich dabei bevorzugt um lineare oder verzweigte Alkylreste mit 3 bis 12 Kohlenstoffatomen.

Bevorzugt ist, wenn die Phosphor- oder organischen Phosphonsäure **PO** partiell verestert ist und ein Dialkylphosphat oder ein organisches Monoalkylphosphonat darstellt, welches genau eine P-OH Gruppe aufweist.

Die Alkohole, mit denen die partiell veresterte Phosphor- oder organische Phosphonsäure **PO** verestert ist, ist nicht speziell limitiert. Bevorzugt handelt es sich um C3- bis C12-, insbesondere C6- bis C10-Alkohole, welche bevorzugt verzweigt sind.

Geeignete und bevorzugte Phosphor- oder organische Phosphonsäuren **PO** sind kommerziell erhältlich, beispielsweise unter den Handelsnamen Stabilizer POP^{®} (Wacker), TIB STAB^{®} 115 (TIB Chemicals) oder Lakeland^{®} TPA 800 (Lakeland Labs).

Die feuchtigkeitshärtende Silikonzusammensetzung enthält insbesondere zwischen 1.0 Gew.-% und 3.0 Gew.-%, bevorzugt zwischen 1.5 Gew.-% und 2.5 Gew.-%, Kondensationskatalysator **K,** bezogen auf die gesamte Zusammensetzung.

### Optionale weitere Inhaltsstoffe

Die erfindungsgemässe Zusammensetzung kann gegebenenfalls noch weitere Bestandteile enthalten, wie sie für feuchtigkeitshärtende, kondensationsvernetzende Silikonzusammensetzungen üblich sind. Derartige zusätzliche Bestandteile sind z.B. Füllstoffe, Weichmacher, Haftvermittler, Härtungsbeschleuniger, OH-Fänger, Trocknungsmittel, Benetzungshilfsmittel, Rheologiemodifikatoren, Thixotropierungsmittel, Verarbeitungshilfsmittel, Biozide, UV-Stabilisatoren, Hitzestabilisatoren, Flammschutzmittel, Farbpigmente, Geruchsstoffe, Antistatika und/oder Emulgatoren.

Bevorzugt enthält die die erfindungsgemässe Zusammensetzung mindestens einen dieser genannten optionalen weiteren Inhaltsstoffe.

In bevorzugten Ausführungsformen der feuchtigkeitshärtenden Silikonzusammensetzung enthält die Zusammensetzung zusätzlich mindestens einen Füllstoff, insbesondere in einer Menge von zwischen 10 Gew.-% und 60 Gew.-%, bevorzugt zwischen 25 Gew.-% und 45 Gew.-%, bezogen auf die gesamte Zusammensetzung.

Füllstoffe können z.B. sowohl rheologische Eigenschaften der nicht ausgehärteten Zusammensetzung als auch die mechanischen Eigenschaften und die Oberflächenbeschaffenheit der ausgehärteten Zusammensetzung beeinflussen. Es kann von Vorteil sein, in einer Zusammensetzung verschiedene Füllstoffe einzusetzen.

Beispiele für geeignete Füllstoffe sind anorganische oder organische Füllstoffe, wie natürliche, gemahlene Kreiden oder stark getrocknete Fällungskreiden, welche beide gegebenenfalls oberflächenbehandelt sind, z.B. mit Fettsäuren; Kieselsäuren (Silica), insbesondere pyrogene Kieselsäuren, welche gegebenenfalls oberflächenbehandelt sind, z.B. mit Silikonölen; Aluminiumhydroxide wie Aluminiumtrihydroxid, Magnesiumoxide und hydroxide; Russ, insbesondere Industrierusse; Bariumsulfat, Dolomit; Kieselerden; Kaolin; Hohlkugeln; Quarz; calcinierte Aluminiumoxide; Aluminiumsilicate; Magnesium-Aluminiumsilicate; Zirkoniumsilicate; Cristobalitmehl; Diatomeenerde; Glimmer; Titanoxide; Zirconiumoxide; Gips; Graphit; Kohlefasern; Zeolithe; sowie Glasfasern, deren Oberfläche gegebenenfalls mit einem Hydrophobierungsmittel behandelt ist.

Bevorzugt als Füllstoff ist ein gemahlenes, insbesondere unbeschichtetes Calciumcarbonat, insbesondere in einer Menge von zwischen 10 Gew.-% und 60 Gew.-%, bevorzugt zwischen 25 Gew.-% und 45 Gew.-%, bezogen auf die gesamte Zusammensetzung.

Die gemahlene Kreide kann beschichtet oder unbeschichtet sein, bevorzugt unbeschichtet. Geeignete Beschichtungen sind dem Fachmann bekannt und umfassen beispielsweise Stearatbeschichtungen und Silanbeschichtungen.

Geeignete gemahlene Kreiden sind kommerziell in grosser Zahl erhältlich, beispielsweise die Omyacarb^{®} Typen der Firma Omya, beispielsweise 1-AV oder 5-AV; sowie die Calcilit^{®} und Calciplast^{®} Typen der Firma Alpha-Calcit.

Fällungskreiden sind nicht bevorzugt, da diese oft einen signifikanten Wassergehalt aufweisen und aufwändig getrocknet werden müssen, um eine ausreichende Lagerstabilität zu gewährleisten.

Als gemahlene Kreiden (Calciumcarbonate) können alle handelsüblichen Kreiden eingesetzt werden, wobei die gemahlene Kreide in bevorzugten Ausführungsformen eine Partikelgrösse d50 zwischen 1 und 5 µm aufweist.

Die Angabe der Partikelgrösse oder synonym Teilchengrösse d50 bezieht sich dabei darauf, dass 50 Gew.-% der Teilchen eine Grösse aufweisen, welche gleich oder kleiner ist als der angegebene Wert.

Die Teilchengrösse d50 kann typischerweise durch Laserlichtstreuung gemäss der Norm ISO 13320:2009, beispielsweise mit dem Gerät CILAS 920 der Firma CILAS oder dem Gerät Malvern Mastersizer 3000 der Firma Malvern Panalytical, bestimmt werden.

Geeignete gemahlene Kreiden sind beispielsweise erhältlich von den Firmen Provençale und Omya.

Der Füllstoff, insbesondere die gemahlene Kreide, weist normalerweise herstellungsbedingt einen vorteilhaft niedrigen Wassergehalt auf. Trotzdem kann es bezüglich Lagerstabilität (insbesondere bei RTV-1 Zusammensetzungen) vorteilhaft sein, die Füllstoffe zusätzlich zu trocknen. Dazu eignet sich beispielsweise eine Vakuumierung bei erhöhter Temperatur, z.B. mindestens 60°C, bevorzugt 80°C bis 100°C, oder ohne Vakuum bei 120°C über eine längere Zeit, z.B. 24h. Der Wassergehalt des getrockneten Füllstoffs ist bevorzugt < 0.2 Gew.-%, insbesondere < 0.1 Gew.-%, bezogen auf das Gesamtgewicht des getrockneten Füllstoffs.

Die erfindungsgemässe Zusammensetzung enthält vorzugsweise keine gefällte Kieselsäure, da diese die Lagerstabilität der Zusammensetzung beeinträchtigen kann.

Pyrogene Kieselsäuren hingegen sind ohne Einschränkung möglich und bevorzugt. Die Zugabe von pyrogenen Kieselsäuren verbessert die Standfestigkeit und die thixotropen Eigenschaften der Zusammensetzung.

Die feuchtigkeitshärtende Silikonzusammensetzung enthält somit bevorzugt zusätzlich eine pyrogene Kieselsäure.

Pyrogene Kieselsäuren sind insbesondere in einer Menge von zwischen 0.5 Gew.-% und 10 Gew.-%, bevorzugt zwischen 1 Gew.-% und 5 Gew.-%, bezogen auf die gesamte Zusammensetzung, enthalten.

Ein Beispiel für gegebenenfalls einzusetzende Weichmacher sind trialkylsilylterminierte Polydimethylsiloxane, wobei die trialkylsilylterminierten Polydimethylsiloxane bevorzugt eine Viskosität bei 23°C im Bereich von 1 bis 10'000 mPa·s aufweisen. Es können auch z.B. trimethylsilylterminierte Polydimethylsiloxane eingesetzt werden, bei denen einige der Methylgruppen durch andere organische Gruppen wie zum Beispiel Phenyl-, Vinyl- oder Trifluorpropylgruppen ersetzt sind. Das Polydimethylsiloxan kann auch monofunktionell sein, d.h. ein Ende ist reaktiv, z.B. über eine Hydroxy-Endgruppe. Bestimmte Kohlenwasserstoffe können ebenfalls als Weichmacher eingesetzt werden. Geeignete Kohlenwasserstoffe können z.B. unter dem Handelsnamen Hydroseal G 232 H von der Firma Total kommerziell erworben werden.

Beispiele für gegebenenfalls einzusetzende Haftvermittler sind Silylgruppenhaltige Verbindungen, die hydrolysierbare Reste am Si-Atom tragen, insbesondere Epoxysilane wie beispielsweise 3-Glycidoxypropyltrimethoxysilan. Solche Silane werden den Vernetzern der allgemeinen Formel (III) zugeordnet, da sie an der Vernetzungsreaktion teilnehmen können.

Es kann vorteilhaft sein, zwei oder mehrere Haftvermittler zu kombinieren.

Die gegebenenfalls eingesetzten OH-Fänger sind Verbindungen, die mit gegebenenfalls vorhandenen OH-Gruppen reagieren. OH-Gruppen können vorhanden sein als unverschlossene Kettenenden von Polydiorganylsiloxanen, als OH-Gruppen auf Füllstoffen und als Wasser. OH-Fänger können Si-N haltige Verbindungen sein. Beispiele für OH-Fänger sind Hexamethyldisilazan (HMDZ), Hexamethylcyclotrisilazan, Octamethyltetrasilazan, Bis(trimethylsilyl)harnstoff. HMDZ ist der am meisten bevorzugte OH-Fänger.

Alle Bestandteile der feuchtigkeitshärtenden, kondensationsvernetzenden Zusammensetzung können auf übliche Weise miteinander vermischt werden. Dazu werden die Einzelkomponenten in geeigneten Mischaggregaten, z.B. Zwangsmischern, Planetenmischern, Mischrohren, Knetern, Dissolvern oder Extrudern innig miteinander vermischt. Die Mischung kann kontinuierlich oder im Batch Prozess erfolgen. Dabei kann das erfindungsgemässe, vernetzbare Polydiorganylsiloxan **P,** insbesondere eines der allgemeinen Formel (I) oder der Formel (la), in einer vorgelagerten, räumlich getrennten Reaktion hergestellt, gegebenenfalls zwischengelagert und dann in geeigneter Menge in das Mischaggregat dosiert werden. Alternativ ist es auch möglich, und teilweise bevorzugt, das vernetzbare Polydiorganylsiloxan **P,** insbesondere eines der allgemeinen Formel (I) oder der Formel (la), direkt im Mischaggregat wie weiter oben beschrieben herzustellen und die weiteren Inhaltsstoffe nach Abschluss dieser Herstellung, ohne Aufarbeitung und/oder Zwischenlagerung des Polydiorganylsiloxans **P** zuzudosieren und einzumischen.

In einer bevorzugten Ausführungsform ist die erfindungsgemässe Zusammensetzung eine einkomponentige Zusammensetzung, die über Luftfeuchtigkeit aushärtet.

Die erfindungsgemässe Zusammensetzung kann als Klebstoff oder Dichtstoff in einem Verfahren zum Verkleben oder Verfugen von Substraten verwendet werden.

Somit ist ein Aspekt der Erfindung ein Verfahren zum Verkleben oder Verfugen von Substraten.

Das Verfahren zum Verkleben oder Verfugen von Substraten mit einer feuchtigkeitshärtenden Zusammensetzung gemäss vorliegender Erfindung und vorheriger Beschreibung umfasst:
a) gegebenenfalls das Vermischen allfällig in unterschiedlichen Gebinden gelagerter Komponenten der Zusammensetzung, um eine vollständige Mischung aller Inhaltsstoffe der Zusammensetzung zu erhalten,
b) die Applikation der vollständig gemischten Zusammensetzung auf ein Substrat und das Fügen, der auf dem Substrat applizierten Mischung mit einem weiteren Substrat, um eine Klebverbindung zwischen den Substraten zu erhalten, oder das Einbringen der Mischung in eine Fuge zwischen zwei Substraten, um eine Verfugung zwischen den Substraten zu erhalten, und
c) das Härten der so applizierten Zusammensetzung durch Einwirken von Feuchtigkeit, insbesondere Luftfeuchtigkeit.

Das allfällige Einmischen gemäss Schritt a) kann somit vor oder während der Applikation oder Einbringung gemäss Schritt b) durchgeführt wird. Die Vermischung sollte relativ kurz vor der weiteren Verarbeitung erfolgen, da mit der Vermischung der Aushärteprozess beginnt. Naturgemäss entfällt Schritt a) bei Verwendung einer RTV-1 Formulierung.

Die Applikation auf ein Substrat oder das Einbringen in eine Fuge zwischen Substraten gemäss Schritt b) kann auf übliche Weise erfolgen, z.B. von Hand oder in einem automatisierten Prozess mithilfe von Robotern. Beim Verkleben wird das mit der Mischung versehene Substrat mit einem weiteren Substrat in Kontakt gebracht, gegebenenfalls unter Druck, um eine Klebverbindung zwischen den Substraten zu erhalten. Danach lässt man in Schritt c) die Mischung härten, gewöhnlich bei Raumtemperatur, um die Verklebung oder Verfugung der Substrate zu erreichen. Auf diese Weise werden die erfindungsgemässen verklebten oder verfugten Substrate mit der gehärteten Mischung als Kleb- oder Dichtmaterial erhalten.

Die zu verklebenden oder verfugenden Substrate können aus dem gleichen oder aus einem verschiedenen Material sein. Es können alle üblichen Materialien mit der erfindungsgemäßen zweikomponentigen Zusammensetzung verklebt oder verfugt werden. Bevorzugte Materialien zum Verkleben oder Verfugen sind Glas, Metalle, wie z.B. Aluminium, Kupfer, Stahl oder Edelstahl, Beton, Mörtel, Bausteine, wie z.B. Sandstein und Kalksandstein, Asphalt, Bitumen, Kunststoffe, wie z.B. Polyolefine, PVC, Tedlar, PET, Polyamid, Polycarbonat, Polystyrol oder Polyacrylat und Verbundwerkstoffe wie CFK.

Die erfindungsgemässe zweikomponentige Zusammensetzung kann somit als Klebstoff oder Dichtstoff verwendet werden, z.B. in den Bereichen Bau, Sanitär, Automobil, Solartechnik, Windkrafttechnik, weisse Ware, Fassaden- und Fensterbau, Elektronik und Boots- und Schiffbau.

Dementsprechend ist ein weiterer Gegenstand der Erfindung die Verwendung einer erfindungsgemässen Zusammensetzung gemäss vorgängiger Beschreibung als Klebstoff, Dichtstoff, Beschichtung oder Vergussmasse, insbesondere in den Bereichen Bau, Sanitär, Automobilbau und -unterhalt, Solartechnik, Windkrafttechnik, weisse Ware, Fassaden- und Fensterbau, Elektronik und Boots- und Schiffbau.

Ein weiterer Gegenstand der Erfindung sind verklebte oder verfugte Substrate, erhältlich nach einem Verfahren wie eben beschrieben.

### Beispiele

Im Folgenden werden konkrete Ausführungsformen der Erfindung ausgeführt, die den Umfang der Erfindung aber nicht beschränken sollen. Alle Ausprüfungen wurden bei 23°C und 50% r.F. (relative Feuchtigkeit) durchgeführt.

Die in den nachstehenden Tabellen 3, 5 und 7 angegebenen Mengenanteile der Bestandteile für die Silikonzusammensetzungen wurden nacheinander eingewogen und an einem Speedmixer der Firma Hauschild bei 23°C und 50% relativer Luftfeuchtigkeit. für 20 s bei 2000 Umdrehungen pro Minute unter Anlegen eines Vakuums gemischt. Alle numerischen Werte der Inhaltsstoffe in den Tabellen 3, 5 und 7 bezeichnen Gewichtsteile (z.B. in Gramm) des jeweiligen Inhaltsstoffs, der in die jeweilige Zusammensetzung zugegeben wurde. Die erhaltenen Zusammensetzungen wurden luftdicht verschlossen, bei 23°C für 24h gelagert und anschliessend geprüft. Einige Proben wurden zusätzlich, während 7 Tagen bei 70°C im geschlossenen Gebinde künstlich gealtert, bevor sie bei 23°C für 24h gelagert und anschliessend geprüft wurden.

Die Bestimmung der **Shore A Härte** erfolgte nach 7d Aushärtung an einem Shore A Prüfgerät der Firma Bareiss nach DIN ISO 7619-1. Zur Bestimmung der Shore A Härte wurden runde Probekörper mit einem Durchmesser von 42 mm und einer Dicke von 6 mm hergestellt.

Die Methode zur Bestimmung der **Bruchdehnung,** der **Zugfestigkeit** und der **Spannung bei 100%** Dehnung sowie die Herstellung der dazu benötigten Probekörper ist beschrieben in ISO 527. Gemessen wurde bei 23°C und 50% relativer Luftfeuchtigkeit an einem Prüfkörper Typ 1B (ISO 527-2) und mit einer Zuggeschwindigkeit von 200 mm/min. Die Zusammensetzungen wurden dazu vorab zu Fellen von 2 mm Dicke gerakelt und für 7d ausgehärtet.

Die Methode zur Bestimmung des **Weiterreisswiderstandes** («WRW») sowie die Herstellung der dazu benötigten Probekörper ist beschrieben in der DIN ISO 34-1. Gemessen wurde an Prüfkörpern vom Typ C.

Zur Bestimmung der **Hautbildezeit** («HBZ») wurde die zu prüfende Zusammensetzung auf einer Fläche von ca. 20 cm² mit einer Dicke von ca. 1 cm ausgestrichen. Es wurde darauf geachtet, dass die Oberfläche glatt war. Der Zeitpunkt des Ausstreichens markierte den Beginn der Messung. Mit einer PE-Pipette wurde die Oberfläche der erhärtenden Zusammensetzung berührt. Die Hautbildezeit war erreicht, wenn die PE-Pipette ohne sichtbare Anhaftungen abgenommen werden konnte.

Die Bestimmung der **Viskosität** erfolgte nach DIN EN ISO 3219 mittels Kegel-Platte-Viskosimeter MCR101 der Firma Anton-Paar, Österreich, mit Kegel-Typ CP 25-1 und einem Abstand von 0.049 mm bei 23°C. Die angegebenen Viskositätswerte beziehen sich auf eine Scherrate von 0.9 s⁻¹.
Abkürzungen von verwendeten Chemikalien können der folgenden Tabelle 1 entnommen werden. Alle Polymere basieren auf linearem Polydimethylsiloxan (PDMS) Alle Chemikalien sind, soweit nicht anders angegeben, im Chemikalienhandel (z.B. Sigma-Aldrich) kommerziell erhältlich.

**Tabelle 1: Verwendete Inhaltsstoffe.**

| **Bezeichnung** | **Beschreibung** |
|---|---|
| Polymer P1 | PDMS, 80'000 mPa s, endgruppenfunktionalisiert mit Vinyldimethoxysilan (Wacker^{®} Polymer AL 100 von Wacker Chemie AG). |
| Weichmacher | PDMS, 100 mPa s, mit Trimethylsilyl-Endgruppen (Silikonöl Wacker^{®} AK 100 von Wacker Chemie AG). |
| Vernetzer V1 | Vinyltrimethoxysilan |
| Vernetzer V2 | Methyltrimethoxysilan |
| Haftvermittler 1 | Tris[3-(trimethoxysilyl)propyl] isocyanurat (Dynasylan^{®} VPS 7163 von Evonik) |
| Haftvermittler 2 | 3-Glycidoxypropyltrimethoxysilan |
| Haftvermittler 3 | 3-Glycidoxypropyltriethoxysilan |
| Haftvermittler 4 | 3-Mercaptopropyltrimethoxysilan |
| Polyether | Lineares PPG-Diol (Acclaim^{®} Polyol 4200 von Covestro) |
| Silica 1 | Pyrogene Silica, (Cab-O-Sil^{®} LM 150 von Cabot) |
| Kreide 1 | Gemahlene Kreide (OMYACARB^{®} 5-AV von Omya) |
| Kreide 2 | Gemahlene Kreide mit Partikelgrösse d50 = 0.9 µm (Calatem^{®} CT von Prove 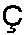 çale) |
| Titanat TI1 | Bis(ethyl-acetoacetat)bis(2-methylpropan-1-olat)titanium; 452 g/mol (Tytan^{®} S6 von Borica) |
| Titanat TI2 | Titan-Phosphatester-Komplex ohne Ethyl-acetoacetat-Liganden (Tyzor^{®} IAM von Dorf Ketal) |
| Titanat TI3 | Tetra-n-butyl titanat (Tyzor^{®} TnBT von Dorf Ketal) |
| Phosphat PO1 | Phosphorsäurediester von 2-Ethylhexanol; 322.43 g/mol (TIB STAB^{®} 115 von TIB) |

### Herstellung der Kondensationsatalvsatoren K

Eine Reihe von Kondensationskatalysatoren **K** wurde hergestellt, indem jeweils Titanat TI1 und Phosphat PO1 in definiertem Mengenverhältnis bei Raumtemperatur vermischt und reagieren gelassen wurden. Dabei bildete sich jeweils ein Phosphatkomplex am Titanat. Die Reaktion lässt sich über ³¹P- und ¹H-NMR Spektroskopie verfolgen. Die NMR-Messungen selbst sind dem Fachmann bekannt und können routinemässig durchgeführt werden. Während der Reaktion verschwinden dabei nach und nach die ³¹P-NMR Signale im NMR-Spektrum der Reaktionsmischung der freien (nicht komplexierten) Phosphate (0.25 ppm für einen Monoester und 1.45 ppm für einen Diester). Wenn diese Phosphate am Titanatom komplexiert sind, werden unter anderem Signale bei -10 ppm, bzw. -20 ppm im ³¹P-NMR Spektrum sichtbar. Gleichzeitig lässt sich der Komplexierungsfortschritt im ¹H-NMR Spektrum der Reaktionsmischung vorfolgen. Das Signal der freien P(=O)-OH Gruppe des unkomplexierten, teilweise veresterten Phosphats bei 10.9 ppm verschwindet.

Bei der Herstellung der Kondensationskatalysatoren **K** wurde die Reaktion so lange durchgeführt, bis die ³¹P-NMR und ¹H-NMR Spektren eine vollständige Komplexierung der eingesetzten Phosphatester belegten. Die so erhaltenen Kondensationskatalysatoren **K** wurden dann ohne Aufarbeitung weiterverwendet. In Tabelle 2 sind die hergestellten Kondensationskatalysatoren **K** und die eingesetzten Mengen an Titanat TI1 und Phosphat PO1 dargestellt.

**Tabelle 2: Hergestellte Katalysatoren K. * nicht erfindungsgemäss**

| **Katalysator K** | Gewichtsteile Titanat TI1 | Gewichtsteile Phosphat PO1 | Molverhältnis Titan zu Phosphat |
|---|---|---|---|
| Katalysator K1 | 1.9 | 0.57 | 2:1 |
| Katalysator K2 | 2.16 | 0.32 | 4:1 |
| Katalysator K3 | 2.16 | 0.22 | 6:1 |
| Katalysator K4 * | 0.79 | 1.12 | 1:2 |

In einem weiteren Versuch wurde Titanat TI3 mit Phosphat PO1 komplexiert, entsprechend der Herstellung von Katalysator K1. Dabei bildete sich jedoch ein unlöslicher Komplex, der in einer Beispielformulierung wie in Tabelle 3 dargestellt vollkommen inaktiv war. Diese Zusammensetzung härtete in der Folge nicht aus. Dies zeigt, dass Liganden, welche die Löslichkeit bez. die Mischbarkeit in Silikonmatrizen positiv beeinflussen, wie zum Beispiel Ethylacetoacetatliganden am Titanat TI vorteilhaft sind.

Dasselbe ist weiter unten in Tabelle 6 mit Titanat TI2 zu beobachten. Zwar handelt es sich bei diesem Titanat TI um einen Komplex mit Phosphat PO-Liganden, aber es fehlen auch hier die Ethylacetoacetat-Liganden. Das führt zu einer erheblich schlechteren Lagerstabilität als bei den erfindungsgemässen Versuchen, welche Katalysatoren **K** verwenden.

**Tabelle 3: Formulierungsdetails und einige Messergebnisse der Versuche E1 bis E10. «n/m» bedeutet nicht gemessen. * nicht erfindungsgemässe Referenzversuche.**

| **Versuch** | **E1*** | **E2*** | **E3** | **E4** | **E5** | **E6** | **E7** | **E8** | **E9** | **E10** |
|---|---|---|---|---|---|---|---|---|---|---|
| Polymer P1 | 39.5 | 39.5 | 39.5 | 37.5 | 39.7 | 39.8 | 39.5 | 39.5 | 39.5 | 39.5 |
| Polyether | 0.5 | 0.5 | 0.5 | 0.5 | 0.5 | 0.5 | 0.5 | 0.5 | 0.5 | 0.5 |
| Weichmacher | 15.2 | 15.2 | 15.2 | 12 | 15.3 | 15.3 | 15.2 | 15.2 | 15.2 | 15.2 |
| Haftvermittler 1 | - | - | - | - | - | - | - | - | - | 0.3 |
| Vernetzer V1 | 1.2 | 1.2 | 1.2 | 1.0 | 1.2 | - | 1.2 | 1.2 | 1.2 | 1.2 |
| Vernetzer V2 | 0.5 | 0.5 | 0.5 | 0.7 | - | 1.0 | 0.5 | 1.0 | 1.0 | 0.5 |
| Haftvermittler 2 | - | - | - | - | - | - | - | 1.0 | - | - |
| Haftvermittler 3 | - | - | - | - | - | - | - | - | 1.0 | - |
| Silica 1 | 4.6 | 4.6 | 4.6 | 4.6 | 4.6 | 4.6 | 4.6 | 4.6 | 4.6 | 4.6 |
| Kreide 1 | - | - | - | 42 | 37 | 37 | 36.8 | 36.8 | 36.8 | 37 |
| Kreide 2 | 37 | 37 | 37 | - | - | - | - | - | - | - |
| Phosphat PO1 | - | 0.2 | - | - | - | - | - | - | - | - |
| Titanat TI1 | 1.5 | 1.5 | - | - | - | - | - | - | - | - |
| Katalysator K1 | - | - | 1.7 | 1.7 | 1.7 | 1.7 | 1.7 | 1.7 | 1.7 | 1.7 |

| Messwerte frisch (gemessen bei Normklima) | | | | | | | | | | |
|---|---|---|---|---|---|---|---|---|---|---|
| HBZ [min] | 20 | 26 | 32 | 9 | 21 | 21 | 55 | 60 | 30 | 52 |
| Viskosität [Pa·s] | 531 | 830 | 886 | 2000 | 718 | 748 | 766 | 845 | 949 | 820 |

| Messwerte nach Alterung in geschlossenem Gebinde während 7 Tagen bei 70°C (gemessen bei Normklima) | | | | | | | | | | |
|---|---|---|---|---|---|---|---|---|---|---|
| HBZ [min] | 20 | 17 | 20 | 21 | 37 | 35 | 36 | 50 | 30 | 30 |
| Viskosität [Pa·s] | n/m | 973 | 647 | 1544 | 745 | 1329 | 580 | 1060 | 1307 | 1108 |

**Tabelle 4: Messergebnisse nach Aushärtung der Versuche E1 bis E10. «n/m» bedeutet nicht gemessen. * nicht erfindungsgemässe Referenzversuche.**

| **Versuch** | **E1*** | **E2*** | **E3** | **E4** | **E5** | **E6** | **E7** | **E8** | **E9** | **E10** |
|---|---|---|---|---|---|---|---|---|---|---|
| Messwerte nach 7 Tagen Aushärtung bei Normklima (23°C, 50% r.h.) | | | | | | | | | | |
| Zugfestigkeit [MPa] | 2.66 | 3.13 | 2.24 | 2.4 | 2.6 | 2.6 | 2.6 | 2.97 | 2.97 | 3.06 |
| Bruchdehnung [%] | 800 | 859 | 734 | 509 | 660 | 692 | 616 | 625 | 622 | 507 |
| Spannung bei 100% [MPa] | 0.63 | 0.6 | 0.62 | 0.9 | 0.64 | 0.67 | 0.68 | 0.54 | 0.63 | 0.66 |
| Shore A Härte | n/m | 34 | 32 | 42 | 30 | 32 | 31 | 31 | 30 | n/m |
| WRW [N/mm] | 16.8 | 15.5 | 15.9 | 19 | 18.6 | 18 | 16 | 16.8 | 20 | 18.3 |

| Messwerte nach Alterung in geschlossenem Gebinde während 7 Tagen bei 70°C (gemessen bei Normklima) | | | | | | | | | | |
|---|---|---|---|---|---|---|---|---|---|---|
| Zugfestigkeit [MPa] | 0.34 | 1.72 | 2.7 | 2.03 | 2 | 2 | 2.1 | 2.64 | 2.59 | 2.54 |
| Bruchdehnung [%] | 132 | 750 | 802 | 480 | 582 | 636 | 555 | 525 | 559 | 539 |
| Spannung bei 100% [MPa] | 0.32 | 0.51 | 0.61 | 0.86 | 0.58 | 0.57 | 0.63 | 0.6 | 0.6 | 0.67 |
| Shore A Härte | 17 | 26 | 29 | 36 | 24 | 26 | 29 | 29 | 26 | 30 |
| WRW [N/mm] | 2 | 11.9 | 14 | 14.4 | 14.5 | 12.5 | 16 | 15.4 | 17 | 17.7 |

| Prozentuale Veränderung der Eigenschaften im Vergleich von frischem und gealtertem Material | | | | | | | | | | |
|---|---|---|---|---|---|---|---|---|---|---|
| Zugfestigkeit | -87% | -45% | 21% | -15% | -23% | -23% | -19% | -11% | -13% | -17% |
| Spannung bei 100% | -97% | -18% | -2% | -5% | -10% | -18% | -8% | 10% | -5% | -1% |

Die Ergebnisse der Tabelle 4 zeigen, dass der erfindungsgemässe Katalysator K1 durchwegs zu höherer Lagerstabilität führt (gemessen mittels Vergleichs zwischen mechanischen Werten, hier Zugfestigkeit und Spannung bei 100% Dehnung, welche für Kleb- und Dichtstoffe wichtige Eigenschaften sind). Dabei weisen erfindungsgemäss katalysierte Zusammensetzungen einen kleineren Unterschied in diesen mechanischen Eigenschaften auf, wenn frisch hergestelltes und künstlich gealtertes Material geprüft und verglichen wird. Künstliche Alterung wurde in allen Beispielen durchgeführt, indem eine hergestellte Probe im verschlossenen Gebinde während 7 Tagen bei 70°C gelagert wurde. Mit einer solchen Hitzelagerung lässt sich die Lagerstabilität einer Zusammensetzung durch eine simulierte, beschleunigte Alterung bestimmen.

Insbesondere bemerkenswert ist, dass der erfindungsgemässe komplexierte Katalysator K1 zu einer höheren Lagerstabilität führt, als wenn das dafür verwendete Titanat TI1 und die dafür verwendete veresterte Phosphorsäure PO1 einzeln (nicht vorab komplexiert) zugegeben werden (Vergleich E2* mit E3).

**Tabelle 5: Formulierungsdetails und einige Messergebnisse der Versuche E11 bis E15. «n/m» bedeutet nicht gemessen. * nicht erfindungsgemässe Referenzversuche. «n/h» bedeutet, dass die Probe nicht nach 7 Tagen Aushärtezeit bei Normklima nicht mehr ausgehärtet ist.**

| **Versuch** | **E11** | **E12** | **E13** | **E14*** | **E15*** |
|---|---|---|---|---|---|
| Polymer P1 | 35.8 | 35.8 | 35.8 | 35.8 | 35.8 |
| Weichmacher | 14 | 14 | 14 | 14 | 14 |
| Polyether | 0.5 | 0.5 | 0.5 | 0.5 | 0.5 |
| Haftvermittler 4 | 1.1 | 1.1 | 1.1 | 1.1 | 1.1 |
| Vernetzer V2 | 1.0 | 1.0 | 1.0 | 1.0 | 1.0 |
| Silica 1 | 4.4 | 4.4 | 4.4 | 4.4 | 4.4 |
| Kreide 2 | 40.9 | 40.9 | 40.9 | 40.9 | 40.9 |
| Katalysator K1 | 2.5 | - | - | - | - |
| Katalysator K2 | - | 2.5 | - | - | - |
| Katalysator K3 | - | - | 2.5 | - | - |
| Titanat TI2 | - | - | - | 2.5 | - |
| Katalysator K4 | - | - | - | - | 2.5 |

| Messwerte frisch (gemessen bei Normklima) | | | | | |
|---|---|---|---|---|---|
| HBZ [min] | 80 | 40 | 30 | 80 | >360 |
| Viskosität [Pa·s] | 1327 | 1236 | 1369 | n/m | n/m |

| Messwerte nach Alterung in geschlossenem Gebinde während 7 Tagen bei 70°C (gemessen bei Normklima) | | | | | |
|---|---|---|---|---|---|
| HBZ [min] | 40 | 25 | 30 | 200 | n/h |
| Viskosität [Pa·s] | 1661 | 1391 | 1579 | n/m | n/m |

**Tabelle 6: Messergebnisse nach Aushärtung der Versuche E11 bis E15. «n/m» bedeutet nicht gemessen. * nicht erfindungsgemässe Referenzversuche. «n/h» bedeutet, dass die Zusammensetzung nach einer Aushärtezeit von 7 Tagen bei Normklima nicht ausgehärtet war und nicht gemessen werden konnte.**

| **Versuch** | **E11** | **E12** | **E13** | **E14*** | **E15*** |
|---|---|---|---|---|---|
| Messwerte nach 7 Tagen Aushärtung bei Normklima (23°C, 50% r.h.) | | | | | |
| Zugfestigkeit [MPa] | 2.45 | 1.9 | 1.66 | 2.94 | n/h |
| Bruchdehnung [%] | 656 | 536 | 584 | 755 | n/h |
| Spannung bei 100% [MPa] | 0.78 | 0.73 | 0.72 | 0.85 | n/h |
| WRW [N/mm] | n/m | 16.4 | 19.4 | 166 | n/h |

| Messwerte nach Alterung in geschlossenem Gebinde während 7 Tagen bei 70°C (gemessen bei Normklima) | | | | | |
|---|---|---|---|---|---|
| Zugfestigkeit [MPa] | 2.26 | 1.75 | 1.58 | 0.38 | n/h |
| Bruchdehnung [%] | 507 | 478 | 441 | 137 | n/h |
| Spannung bei 100% [MPa] | 0.88 | 0.58 | 0.67 | 0.34 | n/h |
| WRW [N/mm] | n/m | n/m | n/m | n/m | n/h |

| Prozentuale Veränderung der Eigenschaften im Vergleich von frischem und gealtertem Material | | | | | |
|---|---|---|---|---|---|
| Zugfestigkeit | -8% | -18% | -5% | -87% | - |
| Spannung bei 100% | 13% | -20% | -7% | -60% | - |

**Tabelle 7: Formulierungsdetails und einige Messergebnisse der Versuche E16 bis E20. * nicht erfindungsgemässe Referenzversuche.**

| **Versuch** | **E16*** | **E17** | **E18** | **E19** | **E20** |
|---|---|---|---|---|---|
| Polymer P1 | 37.67 | 37.67 | 37.67 | 37.67 | 37.67 |
| Weichmacher | 14.6 | 14.6 | 14.6 | 14.6 | 14.6 |
| Polyether | 0.58 | 0.58 | 0.58 | 0.58 | 0.58 |
| Vernetzer V1 | 0.88 | 0.88 | 0.88 | 0.88 | 0.88 |
| Vernetzer V2 | 0.68 | 0.68 | 0.68 | 0.68 | 0.68 |
| Silica 1 | 5.0 | 5.0 | 5.0 | 5.0 | 5.0 |
| Kreide 2 | 38.93 | 38.93 | 38.93 | 38.93 | 38.93 |
| Katalysator K2 | - | 0.41 | 0.83 | 1.24 | 1.65 |
| Titanat TI1 | 1.65 | 1.24 | 0.83 | 0.41 | - |

| Messwerte frisch (gemessen bei Normklima) | | | | | |
|---|---|---|---|---|---|
| HBZ [min] | 46 | 54 | 69 | 64 | 60 |
| Viskosität [Pa·s] | 1034 | 984 | 992 | 1014 | 993 |

| Messwerte nach Alterung in geschlossenem Gebinde während 7 Tagen bei 70°C (gemessen bei Normklima) | | | | | |
|---|---|---|---|---|---|
| HBZ [min] | 45 | 48 | 80 | 75 | 88 |
| Viskosität [Pa·s] | 1020 | 793 | 933 | 979 | 874 |

**Tabelle 8: Messergebnisse nach Aushärtung der Versuche E16 bis E20.**

| **Versuch** | **E16*** | **E17** | **E18** | **E19** | **E20** |
|---|---|---|---|---|---|
| Messwerte nach 7 Tagen Aushärtung bei Normklima (23°C, 50% r.h.) | | | | | |
| Zugfestigkeit [MPa] | 14.0 | 14.4 | 15.1 | 15.6 | 12.2 |
| Bruchdehnung [%] | 1297 | 1369 | 1400 | 1452 | 1030 |
| Spannung bei 100% [MPa] | 0.31 | 0.30 | 0.33 | 0.34 | 0.40 |
| Shore A Härte | 27 | 26 | 26 | 28 | 33 |

| Messwerte nach Alterung in geschlossenem Gebinde während 7 Tagen bei 70°C (gemessen bei Normklima) | | | | | |
|---|---|---|---|---|---|
| Zugfestigkeit [MPa] | 1.88 | 5.90 | 10.28 | 11.74 | 11.62 |
| Bruchdehnung [%] | 1278 | 1511 | 1526 | 1562 | 1196 |
| Spannung bei 100% [MPa] | 0.09 | 0.13 | 0.21 | 0.25 | 0.35 |
| Shore A Härte | 8.3 | 14 | 22 | 25 | 27 |

| | | | | | |
|---|---|---|---|---|---|
| * nicht erfindungsgemässe Referenzversuche. | | | | | |

Die Ergebnisse in Tabelle 6 zeigen, dass die erfindungsgemässen Katalysatoren **K,** welche gemäss Anspruch 1 hergestellt wurden, zu einer sehr guten Lagerstabilität führen (ausgedrückt durch nur minime Veränderungen bei den mechanischen Eigenschaften nach Aushärtung). Der Referenzversuch E14 mit einem kommerziellen Katalysator verliert die mechanischen Eigenschaften weitgehend nach der künstlichen Alterung der nicht ausgehärteten Zusammensetzung. Referenzversuch E15 härtete gar nicht mehr aus, da der nicht erfindungsgemäss hergestellte Katalysator komplett inaktiv war.

Die Ergebnisse in der Tabelle 8 zeigen, dass die Vorreaktion von dem Metallkomplex **MC** mit der Phosphor- oder organischen Phosphonsäure **PO** schon bei kleinen Mengen an Phosphor- oder organischer Phosphonsäure **PO** eine positive Auswirkung auf die Lagerstabilität hat. Das Optimum wird erreicht, wenn ein Mischverhältnis von ca. 4:1 Metallkomplex **MC** zu Phosphor- oder organischer Phosphonsäure **PO** erreicht wird. Erhöhen der Konzentration der Phosphor- oder organischen Phosphonsäure **PO** auf ein Verhältnis von 2:1 bringt keine weitere Verbesserung und führt vor allem zu einer längeren Hautbildezeit (siehe Versuch E15 in Tabelle 6).

## Patentansprüche

1. Feuchtigkeitshärtende Silikonzusammensetzung umfassend
a) mindestens ein vernetzbares Polydiorganylsiloxan **P** mit Alkoxysilan-Endgruppen;
b) mindestens einen Kondensationskatalysator **K;**
c) mindestens einen Vernetzer **V** mit Alkoxysilangruppen;
d) optional weitere Inhaltsstoffe;
**dadurch gekennzeichnet, dass** der Kondensationskatalysator **K ein** Reaktionsprodukt erhalten aus der Umsetzung eines Äquivalents eines Metallkomplexes **MC** mit zwischen 0.1 und 1 Äquivalenten einer, bevorzugt partiell veresterten, Phosphor- oder organischen Phosphonsäure **PO** darstellt, wobei der Metallkomplex **MC** ein Titanium(IV)-, Zirkonium(IV)- oder ein Aluminium(III)-Komplex, bevorzugt ein Titanium(IV)-Komplex, mit mindestens einem Alkoxyliganden sowie mindestens einem organischen Chelatliganden, ist.

2. Feuchtigkeitshärtende Silikonzusammensetzung gemäss Anspruch 1, **dadurch gekennzeichnet, dass** der Metallkomplex **MC** einen oder zwei Alkoxyliganden umfasst, bevorzugt Alkoxyliganden mit 3 bis 8 Kohlenstoffatomen.

3. Feuchtigkeitshärtende Silikonzusammensetzung gemäss Anspruch 1 oder 2, **dadurch gekennzeichnet, dass** der Metallkomplex **MC** einen oder zwei Chelatliganden umfasst, bevorzugt Acetylacetonatoliganden und/oder Ethylacetoacetatoliganden.

4. Feuchtigkeitshärtende Silikonzusammensetzung gemäss einem der vorhergehenden Ansprüche, **dadurch gekennzeichnet, dass** das vernetzbare Polydiorganylsiloxan **P** in einer Kondensationsreaktion aus OH-terminiertem Polydiorganylsiloxan und einem Tri- oder Tetraalkoxysilan hergestellt wird, bevorzugt einem Methyltrialkoxysilan, Phenyltrialkoxysilan oder einem Vinyltrialkoxysilan.

5. Feuchtigkeitshärtende Silikonzusammensetzung gemäss Anspruch 4, **dadurch gekennzeichnet, dass** die Umsetzung des OH-terminierten Polydiorganylsiloxans mit dem Tri- oder Tetraalkoxysilan in Gegenwart eines Amidin- oder Guanidinkatalysators durchgeführt wird.

6. Feuchtigkeitshärtende Silikonzusammensetzung gemäss einem der vorhergehenden Ansprüche, **dadurch gekennzeichnet, dass** Vernetzer **V** ausgewählt ist aus Alkyl-, Alkenyl- und Aryltrimethoxysilanen, gegebenenfalls weiteren Silanen und/oder Mischungen dieser Silane.

7. Feuchtigkeitshärtende Silikonzusammensetzung gemäss einem der vorhergehenden Ansprüche, **dadurch gekennzeichnet, dass** die Phosphor- oder organischen Phosphonsäure **PO** partiell verestert ist und ein Dialkylphosphat oder ein organisches Monoalkylphosphonat darstellt, welches genau eine P-OH Gruppe aufweist.

8. Feuchtigkeitshärtende Silikonzusammensetzung gemäss einem der vorhergehenden Ansprüche, **dadurch gekennzeichnet, dass** bei der Umsetzung eines Äquivalents eines Metallkomplexes **MC** zwischen 0.25 und 0.75 Äquivalente, bevorzugt zwischen 0.4 und 0.6 Äquivalente, der, bevorzugt partiell veresterten, Phosphor- oder organischen Phosphonsäure **PO** eingesetzt werden.

9. Feuchtigkeitshärtende Silikonzusammensetzung gemäss einem der vorhergehenden Ansprüche, **dadurch gekennzeichnet, dass** die Zusammensetzung zwischen 1.0 Gew.-% und 3.0 Gew.-%, bevorzugt zwischen 1.5 Gew.-% und 2.5 Gew.-%, bezogen auf die gesamte Zusammensetzung, Kondensationskatalysator **K** enthält.

10. Feuchtigkeitshärtende Silikonzusammensetzung gemäss einem der vorhergehenden Ansprüche, **dadurch gekennzeichnet, dass** die Zusammensetzung zusätzlich einen Vernetzer **V** mit Haftvermittlerwirkung enthält, bevorzugt ausgewählt aus Tris[3-(trimethoxysilyl)propyl] isocyanurat, 3-Glycidoxypropyltrimethoxysilan, 3-Glycidoxypropyltriethoxysilan, 3-Mercaptopropyltrimethoxysilan und beliebigen Mischungen davon, insbesondere in einer Menge von zwischen 0.1 Gew.-% und 5 Gew.-%, bevorzugt zwischen 0.5 Gew.-% und 4 Gew.-%, bezogen auf die gesamte Zusammensetzung.

11. Feuchtigkeitshärtende Silikonzusammensetzung gemäss einem der vorhergehenden Ansprüche, **dadurch gekennzeichnet, dass** die Zusammensetzung zusätzlich mindestens einen Füllstoff enthält, bevorzugt ein gemahlenes, insbesondere unbeschichtetes Calciumcarbonat, insbesondere in einer Menge von zwischen 10 Gew.-% und 60 Gew.-%, bevorzugt zwischen 25 Gew.-% und 45 Gew.-%, bezogen auf die gesamte Zusammensetzung.

12. Feuchtigkeitshärtende Silikonzusammensetzung gemäss einem der vorhergehenden Ansprüche, **dadurch gekennzeichnet, dass** als weitere Inhaltsstoffe Weichmacher, Haftvermittler, Härtungsbeschleuniger, OH-Fänger, Trocknungsmittel, Benetzungshilfsmittel, Rheologiemodifikatoren, Thixotropierungsmittel, Verarbeitungshilfsmittel, Biozide, UV-Stabilisatoren, Hitzestabilisatoren, Flammschutzmittel, Farbpigmente, Geruchsstoffe, Antistatika, und/oder Emulgatoren enthalten sind.

13. Feuchtigkeitshärtende Silikonzusammensetzung gemäss einem der Ansprüche 1 bis 12, **dadurch gekennzeichnet, dass** die Zusammensetzung eine einkomponentige Silikonzusammensetzung ist.

14. Verwendung einer Zusammensetzung gemäss einem der vorhergehenden Ansprüche als Klebstoff, Dichtstoff, Beschichtung oder Vergussmasse, insbesondere in den Bereichen Bau, Sanitär, Automobilbau und -unterhalt, Solartechnik, Windkrafttechnik, weisse Ware, Fassaden- und Fensterbau, Elektronik und Boots- und Schiffbau.

15. Verfahren zum Verkleben oder Verfugen von Substraten mit einer feuchtigkeitshärtenden Zusammensetzung gemäss einem der Ansprüche 1-13, umfassend
a) gegebenenfalls das Vermischen allfällig in unterschiedlichen Gebinden gelagerter Komponenten der Zusammensetzung, um eine vollständige Mischung aller Inhaltsstoffe der Zusammensetzung zu erhalten,
b) die Applikation der vollständig gemischten Zusammensetzung auf ein Substrat und das Fügen der auf dem Substrat applizierten Mischung mit einem weiteren Substrat, um eine Klebverbindung zwischen den Substraten zu erhalten, oder das Einbringen der Mischung in eine Fuge zwischen zwei Substraten, um eine Verfugung zwischen den Substraten zu erhalten, und
c) das Härten der so applizierten Zusammensetzung durch Einwirken von Feuchtigkeit, insbesondere Luftfeuchtigkeit.
